# EUROPEAN PATENT APPLICATION

(11) **EP 4 650 591 A1**
(43) Date of publication of application: **19.11.2025**
(21) Application number: 25176513.7
(22) Date of filing: 14.05.2025
(51) Int. Cl.: F02M 21/02

(54) **GASEOUS FUEL INJECTOR WITH FLAME ARRESTOR**

(30) Priority: 15.05.2024 US 202463647685 P; 07.05.2025 US 202519201287
(71) Applicant: Cummins, Inc., Columbus, Indiana 47201 (US)
(72) Inventor: PRIMUS, Raymond, Indiana, 46106 (US); RAVINDRAN, Arun, Indiana, 46074 (US); PHILLIPS, Ross, Indiana, 47201 (US); SHAULL, Anthony, Indiana, 47203 (US); QIN, Xiao, Indiana, 47201 (US); LASKA, Andrew, Indiana, 47201 (US)
(74) Representative: Cleveland Scott York

(57) **Abstract**

A fuel injector for gaseous fuel is provided. The fuel injector includes a flame arrestor and, in certain embodiments, a choke orifice configured to prevent or reduce flame propagation from the combustion chamber through the fuel injector to internal components housed within the fuel injector. The reduction or prevention of flame propagation from the combustion chamber reduces exposure of fuel injector components to temperature changes, improves fuel injector robustness, and increases operating life.

## Description

### Cross-Reference to Related Application:

The present application claims priority to, and the benefit of the filing date of, U.S. Provisional Application Ser. No. 63/647,685 filed on May 15, 2024, which is incorporated herein by reference.

### FIELD OF THE DISCLOSURE

The present disclosure relates generally to a fuel injector for providing gaseous fuel for an internal combustion engine and, more particularly, to a flame arrestor for a fuel injector for gaseous fuel.

### BACKGROUND

Fuel injectors for gaseous fuel injection are subject to extreme conditions due to pressure and temperature. When combustion of the gaseous fuel occurs in the combustion chamber of an internal combustion engine, high temperature combustion gases and combustion flames can flow back into the fuel injector. This subjects the internal injector components to high temperatures that can reduce fuel injector life and robustness. Therefore, there remains a need for the unique apparatuses, systems, and techniques disclosed herein.

### DISCLOSURE OF ILLUSTRATIVE EMBODIMENTS

For the purposes of clearly, concisely and exactly describing illustrative embodiments of the present disclosure, the manner, and process of making and using the same, and to enable the practice, making and use of the same, reference will now be made to certain exemplary embodiments, including those illustrated in the figures, and specific language will be used to describe the same. It shall nevertheless be understood that no limitation of the scope of the invention is thereby created and that the invention includes and protects such alterations, modifications, and further applications of the exemplary embodiments as would occur to one skilled in the art.

### SUMMARY

The present disclosure includes a fuel injector of a gaseous fuel injection system for an internal combustion engine. The fuel injector includes a flame arrestor configured to prevent or reduce flame propagation from the combustion chamber through the fuel injector to internal components housed within the fuel injector.

In certain embodiments, the fuel injector includes a choke orifice in addition to the flame arrestor to facilitate the reduction in flame propagation from the combustion chamber through the fuel injector to internal components housed within the fuel injector.

In an embodiment, a fuel injector for providing gaseous fuel to a combustion chamber is disclosed. The fuel injector includes an elongated injector body defining a longitudinally extending fuel passage therein. The fuel passage extends in a downstream direction from a gas inlet end to a gas outlet end of the injector body. The fuel injector also includes a valve assembly in the fuel passage. The valve assembly includes at least one valve that is selectively opened and closed to control gaseous fuel flow through the fuel passage to the combustion chamber. The fuel injector also includes a flame arrestor in the fuel passage downstream of the valve assembly.

In certain embodiments, a choke is provided in the fuel passage that forms a choke orifice between the gas outlet end and the flame arrestor.

In an embodiment, a device is disclosed for reducing flame propagation through a fuel passage to internal components of a fuel injector that provides gaseous fuel to a combustion chamber. The device includes a flame arrestor configured to be positioned in the fuel passage downstream of the internal components. The flame arrestor includes a plurality of flow passages configured to permit downstream gaseous fuel flow through the flame arrestor in a downstream direction while restricting flame propagation through the flame arrestor in an upstream direction.

In certain embodiments, the device also includes a choke having a choke orifice forming a flow constriction in the fuel passage in a downstream direction from the flame arrestor.

This summary is not intended to identify key or essential features of the claimed subject matter, nor is it intended to be used as an aid in limiting the scope of the claimed subject matter. Further embodiments, forms, objects, features, advantages, aspects, and benefits shall become apparent from the following description and drawings.

### BRIEF DESCRIPTION OF THE DRAWINGS

The description herein makes reference to the accompanying drawings wherein like numerals refer to like parts throughout the several views, and wherein:
FIG. 1 is a schematic view of a fuel injection system.
FIG. 2 is a longitudinal section view illustrating an example gaseous fuel injector for an internal combustion engine, according to an embodiment of the present disclosure.

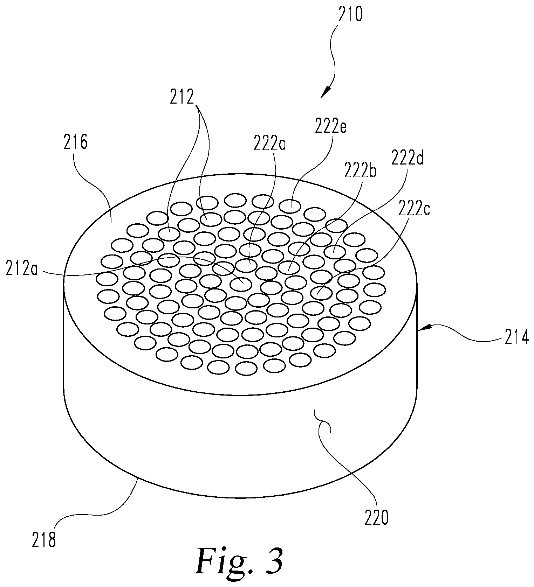

FIG. 3 is a perspective view of a flame arrestor of the gaseous fuel injector of FIG. 2.

### DETAILED DESCRIPTION OF ILLUSTRATIVE EMBODIMENTS

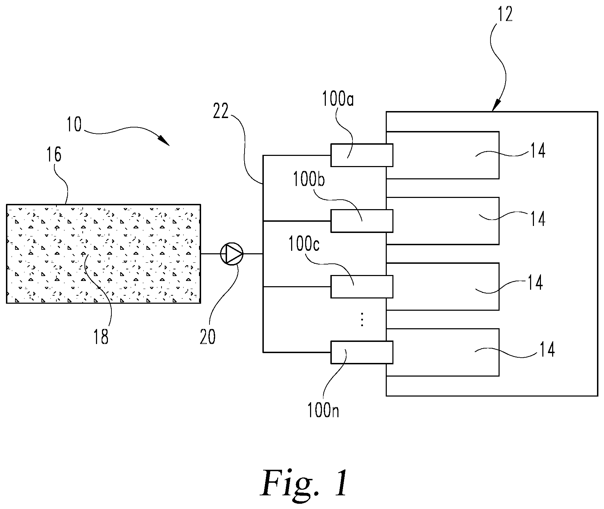

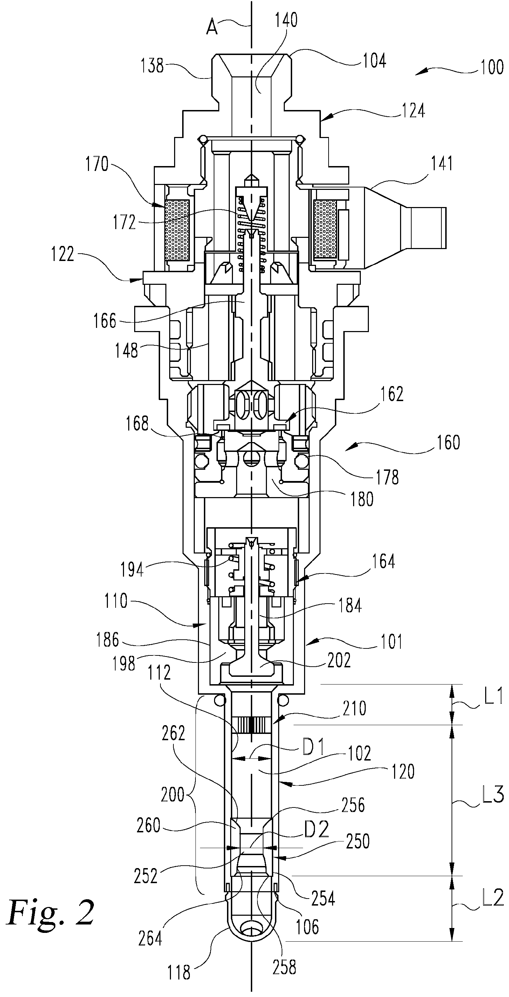

With reference to FIG. 1, there is illustrated a fuel injection system 10 including at least one fuel injector 100a, 100b, 100c ... 100n for a respective combustion chamber 14 of an internal combustion engine 12. The at least one fuel injector 100a, 100b, 100c ... 100n is in fluid communication with a fuel source 16 containing a gaseous fuel 18, and a fuel tank/regulator 20 and/or common rail 22 to distribute fuel to the injectors 100a, 100b, 100c ... 100n. Although multiple fuel injectors are shown schematically in FIG. 1, system 10 may include any number of fuel injectors, including one fuel injector. Pressurized gaseous fuel 18 is supplied to each of the fuel injectors 100a, 100b, 100c ... 100n from the fuel tank/regulator 20. In the discussion that follows, fuel injectors 100a, 100b, 100c ... 100n are described with reference to a fuel injector 100, such as shown in FIG. 2.

In an embodiment, the fuel injector 100 provides gaseous fuel to a combustion chamber 14. Fuel injector 100 includes an elongated injector body 101 defining a longitudinally extending fuel passage 102 therein. Fuel passage 102 extends in a downstream direction from a gas inlet end 104 to a gas outlet end 106 of the injector body 101. Fuel injector 100 also includes a valve assembly 160 in the fuel passage 102. Valve assembly 160 includes at least one valve 162 that is selectively opened and closed to control gaseous fuel flow through fuel passage 102 to combustion chamber 14. Fuel injector 100 also includes a flame arrestor 210 in fuel passage 102 downstream of valve assembly 160.

In an embodiment, a device 200 is disclosed for reducing flame propagation through fuel passage 102 to internal components 110 of fuel injector 100 that provides gaseous fuel to combustion chamber 14. Device 200 includes flame arrestor 210 configured to be positioned in fuel passage 102 downstream of internal components 110. Flame arrestor 210 includes a plurality of flow passages 212 configured to permit downstream gaseous fuel flow through flame arrestor 210 in a downstream direction while restricting flame propagation through flame arrestor 210 in an upstream direction.

In certain embodiments, fuel injector 100 includes a choke 250 in fuel passage 102 that forms a choke orifice 252 between gas outlet end 106 and flame arrestor 210. In certain embodiments, device 200 also includes choke 250 that includes choke orifice 252 forming a flow constriction in fuel passage 102 in a downstream direction from flame arrestor 210.

Referring to FIG. 2, injector body 101 extends longitudinally along a central longitudinal axis A. Injector body 101 includes fuel passage 102 that is defined by the injector body 101 from gas inlet end 104 to gas outlet end 106. The longitudinally extending fuel passage 102 receives valve assembly 160 and a valve actuator 170 therein to control gaseous fuel flow from gas inlet end 104 to gas outlet end 106, and to control combustion gas flow from gas outlet end 106 into fuel passage 102. In the discussion herein, "proximal" or "proximally" refer to an axial or longitudinal location or upstream direction toward gas inlet end 104, and "distal" or "distally" refers to an axial or longitudinal location or downstream direction toward gas outlet end 106.

Injector body 101 can include multiple parts that are coupled to one another to form injector body 101. In the illustrated embodiment, injector body 101 includes an outlet part 120 extending from gas outlet end 106, an inlet part 124 extending from gas inlet end 104, and a transition part 122 that connects outlet part 120 and inlet part 124. Other embodiments contemplate an injector body 101 made from a single body part, from two body parts, or from more than two body parts.

Outlet part 124 includes a flange connector 138 to facilitate mounting of the fuel injector 100 on the engine 12. Other features may also be provided on the injector body 101 to facilitate injector mounting. Inlet part 124 includes a gas passage 140 for receiving gaseous fuel flow into passage 102 of injector body 101. Inlet part 124 may also include a harness 141 for receiving wires (not shown) that are coupled to valve actuator 170.

Valve assembly 160 is housed primarily in injector body 101, such as in outlet part 120 and transition part 122. In the illustrated embodiment, valve assembly 160 includes a first valve 162 and a second valve 164 spaced distally and downstream of first valve 162. In other embodiments, valve assembly 160 includes a single valve, or more than two valves. Actuator 170 controls the opening of the gaseous fuel flow valve, designated as first valve 162. In an embodiment, actuator 170 is an electronic actuator, such as a solenoid, which is electronically controlled by energizing and de-energizing a magnetic coil to actively and selectively control opening and closing for first valve 162 of valve assembly 160.

First valve 162 includes a first plunger 166 that is engaged to, and axially movable toward gas inlet end 104, by actuation of actuator 170. In an embodiment, first plunger 166 is an armature plunger. A plunger guide 148 helps axially guide first plunger 166 in response to actuation by actuator 170. First plunger 166 is biased into sealing engagement with first valve seat 168 by a first valve spring 172. When first valve 162 is opened, first valve spring 172 compresses and the first plunger 166 translates axially in the proximal direction.

First valve seat 168 includes an outer seat member 178 and an inner seat member 180 located in an interior of outlet part 120. Inner seat member 180 is located within outer seat member 178. In the illustrated embodiment, first valve seat 168 is comprised of two separate members but could also be composed of a single member.

Second valve 164 includes a second plunger 184 and a second valve seat 186 supported in outlet part 120. Second plunger 184 contacts second valve seat 186 in the closed position of second valve 164 and is moved distally away from second valve seat 186 to open second valve 164. In an embodiment, second valve 164 is provided to limit exposure of first valve 162 to combustion temperatures and pressures from combustion gases flowing into fuel passage 102.

In response to gaseous flow being introduced from first valve 162, second valve spring 194 compresses, which causes second plunger 184 to be displaced distally to an open position. In the open position, head 202 is spaced distally from seat portion 198 to form a gap or passage for gaseous fuel flow to the combustion chamber 14.

Since second valve 164 is passively controlled by second valve spring 194 based on whether or not there is gaseous fuel flow through first valve 162, and since second valve 164 is not actuated by actuator 170 or connected to any components of first valve 162, the axial location of second valve 164 within injector body 101 can be optimized to balance temperature and gas mixing conditions for first valve 162 and second valve 164 during operation of fuel injector 100 depending on combustion conditions expected for the fuel, combustion parameters, etc.

A nozzle 118 is engaged to the outlet end 106 of outlet part 120. Nozzle 118 may include one or more holes arranged to divert gaseous fuel flow in a desired direction or flow pattern into the combustion chamber 14. Nozzle 118 can be configured to optimize combustion of the gaseous fuel based on the combustion conditions of engine 12. Nozzle 118 is always open to allow the gaseous fuel flow to exit fuel passage 102, which also allows combustion gases to enter fuel passage 102.

Fuel injector 100 also includes a device 200 for reducing flame propagation through fuel passage 102 to internal components 110 of fuel injector 100. For example, device 200 includes flame arrestor 210 and, in certain embodiments, choke 250. Flame arrestor 210 is configured to be positioned in fuel passage 102 downstream of the internal components 110. Flame arrestor 210 includes a plurality of flow passages 212 configured to permit downstream gaseous fuel flow through flame arrestor 210 in a downstream direction while restricting flame propagation through flame arrestor 210 in an upstream direction. Choke 250, if included, includes a choke orifice 252 that forms a flow constriction in fuel passage 102 in a downstream direction from flame arrestor 210 which can be optimized for combustion and temperature mitigation.

In an embodiment, choke 250 includes a cylindrical body 254 extending from an upstream end 256 to a downstream end 258. Choke orifice 252 includes a center portion 260 defining a constant diameter along a mid-portion of the length of cylindrical body 254. Choke orifice 252 also includes an upstream portion 262 extending from center portion 260 in the upstream direction, and a downstream portion 264 extending from center portion 260 in the downstream direction. Each of the upstream portion 262 and the downstream portion 264 include diameters that tapered outwardly from the constant diameter center portion 260.

Flame arrestor 210 includes a body 214 extending between a first or upstream end 216 and an opposite second or downstream end 218. The plurality of flow passages 212 extend through body 214 and open at each of the upstream end 216 and the downstream end 218. Body 214 of flame arrestor 210 also includes an outer surface 220 extending from the upstream end 216 to downstream end 218. Outer surface 220 engages an inner surface 112 of injector body 101 that defines fuel passage 102. This maintains flame arrestor 210 in a desired axial location along fuel passage 102 and centers the flow passages 212 in fuel passage 102. The flame arrestor body 214 can be designed to optimize heat transfer away from the arrestor and is not necessarily the same length as the passages. Body 214 can be a cylinder, mesh, screen, or other suitable configuration.

The plurality of flow passages 212 are designed in number and size to permit the desired gaseous fuel flow through flame arrestor 210 to support the designated air-fuel ratio and combustion processes in combustion chamber 14. The plurality of flow passages 212 are also configured to be smaller than the flame front conditions. This allows the solid body portions of flame arrestor 210 between flow passages 212 absorb the heat of the flame front created by combustion in combustion chamber 14 that travels in the upstream direction through fuel passage 102. Choke 250, when provided, restricts the flame and assists in slowing flame temperature propagation through fuel passage 102 before it reaches flame arrestor 210, allowing flame arrestor 210 to be more effective.

In an embodiment, flow passages 212 are circular in cross-section and have a diameter of about 0.5 millimeters. However, other sizes and/or shapes for flow passages 212 are also contemplated. For example, flow passages 212 can be configured in any suitable size and shape, and provided in any suitable number, which allows gaseous fuel flow through flame arrestor 210 to support combustion in combustion chamber 14 while reducing or preventing flame propagation to internal components 110. The reduction or prevention of flame propagation from the combustion chamber reduces exposure of fuel injector components to temperature changes, improves fuel injector robustness, and increases operating life.

In an embodiment, the plurality of flow passages 212 of flame arrestor 210 are arranged to form a plurality of circular patterns 222a, 222b, 222c, 222d, 222e of flow passages 212 arranged concentrically around the upstream and downstream ends 216, 218 of flame arrestor 210. In an embodiment, at least two circular patterns of flow passages 212 are provided. In another embodiment, at least three concentric circular patterns of flow passages 212 are provided through flame arrestor 210. In an embodiment, each of the plurality of concentric circular patterns 222a, 222b, 222c, 222d, 222e of flow passages 212 includes at least five flow passages 212. In an embodiment, plurality of flow passages 212 of flame arrestor 210 includes a central flow passage 212a surrounded by the plurality of concentric circular patterns 222a, 222b, 222c, 222d, 222e of flow passages 212.

In an embodiment, internal components 110 include valve assembly 160. In a further embodiment, valve assembly 160 includes first valve 162 that controls gaseous fuel flow through fuel passage 102 to combustion chamber 14 and second valve 164 spaced longitudinally from first valve 162 toward gas outlet end 164. Second valve 164 is configured to control combustion gas flow from combustion chamber 14 into fuel passage 102 through gas outlet end 106. Second valve 164 is biased to a closed position and is moved from the closed position to an open position by the gaseous fuel flow through the opened first valve 162.

In an embodiment, flame arrestor 210 is downstream of internal components 110. For example, flame arrestor 210 is downstream of second valve 164 of valve assembly 160. Fuel passage 102 includes a first diameter D1 extending in the downstream direction from flame arrestor 210 to gas outlet end 106. When provided, choke orifice 252 of choke 250 defines a second diameter D2 that is less than the first diameter D1. Choke 250 is positioned in fuel passage 102 such that first diameter D1 of fuel passage 102 extends in an upstream direction and in the downstream direction from choke orifice 252. Choke orifice 252 is tapered from second diameter D2 to the first diameter D1 in both the upstream direction and the downstream direction.

In an embodiment, flame arrestor 210 is located a first distance from internal components 110. For example, flame arrestor 210 is spaced an axial distance L1 from the downstream end of second valve 164 of valve assembly 160. Choke 250, when included, is located a second axial distance L2 from gas outlet end 106. In addition, downstream end 258 of choke 250 is located a third distance L3 from flame arrestor 210. Third distance L3 is greater than the first distance L1 and the second distance L2. This arrangement positions choke 250 near outlet end 106 to restrict and slow the flame propagation into fuel passage 102. Internal components 110 and flame arrestor 210 are spaced farther away from choke 250 to create a lower temperature environment and increase the effectiveness of flame arrestor 210. It is also contemplated in other embodiments, that the position of flame arrestor 210 and choke orifice 252, when included, can be arranged in any combination of lengths between the internal components 110 and gas outlet end 106 to optimize combustion requirements.

During operation of fuel injector 100, gaseous fuel enters fuel passage 102 at gas inlet end 104. The gaseous fuel is prevented from flowing through fuel passage 102 by the first valve 162 of valve assembly 160 being in a closed position by first valve spring 172. In addition, second valve 164 of valve assembly 160 is normally closed by second valve spring 194 so that combustion gases cannot flow into fuel passage 102 to reach first valve 162, protecting first valve 162 from the higher combustion temperatures.

Gaseous fuel is injected by opening first valve 162 with actuator 170. This causes gaseous fuel flow to occur downstream of first valve 162 and open second valve 164. The gaseous fuel flow passes through flame arrestor 210, choke 250 (if included), and then through nozzle 118 to combustion chamber 14. Flame propagation created by combustion in combustion chamber 14 back into fuel passage 102 is restricted by choke orifice 252 of choke 250 (if included). Flame arrestor 210 prevents or reduces the ability of the flame front to reach second valve 164, protecting second valve 164 from high heat conditions.

Further written description of a number of example embodiments shall now be provided. According to one aspect, a fuel injector for providing gaseous fuel to a combustion chamber is provided. The fuel injector includes an elongated injector body defining a longitudinally extending fuel passage therein. The fuel passage extends in a downstream direction from a gas inlet end to a gas outlet end of the injector body. The fuel injector also includes a valve assembly in the fuel passage. The valve assembly includes at least one valve that is selectively opened and closed to control gaseous fuel flow through the fuel passage to the combustion chamber. The fuel injector further includes a flame arrestor in the fuel passage downstream of the valve assembly.

In an embodiment, the fuel injector further includes a choke in the fuel passage that forms a choke orifice between the gas outlet end and the flame arrestor.

In an embodiment, the fuel injector includes a nozzle on the gas outlet end of the injector body. The nozzle is configured to divert gaseous fuel flow through the gas outlet end into the combustion chamber.

In an embodiment, the flame arrestor includes a body extending between a first end and an opposite second end. The flame arrestor also includes a plurality of flow passages extending through the body from the first end to the second end.

In a further embodiment, the injector body includes an inner surface extending around the fuel passage. The body of the flame arrestor includes an outer surface extending from the first end to the second end. The outer surface engages the inner surface of the injector body to maintain the flame arrestor in position in the injector body.

In yet a further embodiment, the plurality of flow passages of the flame arrestor includes a central flow passage surrounded by the plurality of flow passages.

In an embodiment, the valve assembly includes a first valve that controls gaseous fuel flow through the fuel passage to the combustion chamber. The valve assembly also includes a second valve spaced longitudinally from the first valve toward the gas outlet end. The second valve is configured to control combustion gas flow from the combustion chamber into the fuel passage through the gas outlet end. The flame arrestor is downstream of the second valve.

In a further embodiment, the second valve is biased to a closed position. The second valve is moved from the closed position to an open position by the gaseous fuel flow through the first valve.

In an embodiment, the fuel passage includes a first diameter extending in the downstream direction from the flame arrestor to the gas outlet end. The choke orifice of the choke defines a second diameter that is less than the first diameter.

In a further embodiment, the choke is positioned in the fuel passage such that the fuel passage extends in an upstream direction and in the downstream direction from the choke orifice. In yet a further embodiment, the choke orifice is tapered from the second diameter to the first diameter in both the upstream direction and the downstream direction.

In an embodiment, the flame arrestor is located a first distance from the valve assembly and the choke is located a second distance from the gas outlet end. The choke is also located a third distance from the flame arrestor, and the third distance is greater than the first distance and the second distance.

According to another aspect of the disclosure, a device is provided for reducing flame propagation through a fuel passage to internal components of a fuel injector that provides gaseous fuel to a combustion chamber. The device includes a flame arrestor configured for positioning in the fuel passage of the fuel injector downstream of the internal components. The flame arrestor includes a plurality of flow passages configured to permit downstream gaseous fuel flow through the flame arrestor in a downstream direction while restricting flame propagation through the flame arrestor in an upstream direction.

In an embodiment, the device includes a choke orifice forming a flow constriction in the fuel passage in the downstream direction from the flame arrestor. In a further embodiment, the choke includes a cylindrical body extending from an upstream end to a downstream end. The choke orifice includes a center portion defining a constant diameter along the cylindrical body.

In a further embodiment, the choke orifice includes an upstream portion extending from the center portion in the upstream direction and a downstream portion extending from the center portion in the downstream direction. Each of the upstream portion and the downstream portion includes a diameter that tapers outwardly from the constant diameter.

In an embodiment, the flame arrestor includes a body extending between an upstream end and an opposite downstream end. The plurality of flow passages extend through the body and open at each of the upstream end and the downstream end.

In a further embodiment. the plurality of flow passages of the flame arrestor are arranged to form patterns arranged around the upstream and downstream ends of the flame arrestor. In yet a further embodiment, the plurality of flow passages of the flame arrestor includes a central flow passage surrounded by the plurality of flow passages.

While illustrative embodiments of the disclosure have been illustrated and described in detail in the drawings and foregoing description, the same is to be considered as illustrative and not restrictive in character, it being understood that only certain exemplary embodiments have been shown and described and that all changes and modifications that come within the spirit of the claimed inventions are desired to be protected. It should be understood that while the use of words such as preferable, preferably, preferred or more preferred utilized in the description above indicates that the feature so described may be more desirable, it nonetheless may not be necessary and embodiments lacking the same may be contemplated as within the scope of the invention, the scope being defined by the claims that follow. In reading the claims, it is intended that when words such as "a," "an," "at least one," or "at least one portion" are used there is no intention to limit the claim to only one item unless specifically stated to the contrary in the claim. When the language "at least a portion" and/or "a portion" is used the item can include a portion and/or the entire item unless specifically stated to the contrary.

### Clauses which may help with understanding the invention

1. A fuel injector for providing gaseous fuel to a combustion chamber, the fuel injector comprising:
   an elongated injector body defining a longitudinally extending fuel passage therein, the fuel passage extending in a downstream direction from a gas inlet end to a gas outlet end of the injector body;
   a valve assembly in the fuel passage, the valve assembly including at least one valve that is selectively opened and closed to control gaseous fuel flow through the fuel passage to the combustion chamber; and
   a flame arrestor in the fuel passage downstream of the valve assembly.
2. The fuel injector of clause 1, further comprising a choke in the fuel passage that forms a choke orifice between the gas outlet end and the flame arrestor.
3. The fuel injector of clause 1, further comprising a nozzle on the gas outlet end of the injector body, wherein the nozzle is configured to divert gaseous fuel flow through the gas outlet end into the combustion chamber.
4. The fuel injector of clause 1, wherein the flame arrestor includes:
   a body extending between a first end and an opposite second end; and
   a plurality of flow passages extending through the body from the first end to the second end.
5. The fuel injector of clause 4, wherein:
   the injector body includes an inner surface extending around the fuel passage; and
   the body of the flame arrestor includes an outer surface extending from the first end to the second end, the outer surface engaging the inner surface of the injector body to maintain the flame arrestor in position in the injector body and to optimize heat transfer.
6. The fuel injector of clause 5, wherein the plurality of flow passages of the flame arrestor includes a central flow passage surrounded by the plurality of flow passages.
7. The fuel injector of clause 1, wherein the valve assembly includes:
   a first valve that controls gaseous fuel flow through the fuel passage to the combustion chamber; and
   a second valve spaced longitudinally from the first valve toward the gas outlet end, the second valve configured to control combustion gas flow from the combustion chamber into the fuel passage through the gas outlet end, wherein the flame arrestor is downstream of the second valve.
8. The fuel injector of clause 7, wherein:
   the second valve is biased to a closed position; and
   the second valve is moved from the closed position to an open position by the gaseous fuel flow through the first valve.
9. The fuel injector of clause 2, wherein:
   the fuel passage includes a first diameter extending in the downstream direction from the flame arrestor to the gas outlet end.
10. The fuel injector of clause 9, wherein:
   the choke orifice of the choke defines a second diameter that is less than the first diameter.
11. The fuel injector of clause 10, wherein the choke is positioned in the fuel passage such that the fuel passage extends in an upstream direction and in the downstream direction from the choke orifice.
12. The fuel injector of clause 11, wherein the choke orifice is tapered from the second diameter to the first diameter in both the upstream direction and the downstream direction.
13. The fuel injector of clause 2, wherein:
   the flame arrestor is located a first distance from the valve assembly;
   the choke is located a second distance from the gas outlet end; and
   the choke is located a third distance from the flame arrestor, the third distance being greater than the first distance and the second distance.
14. A device for reducing flame propagation through a fuel passage to internal components of a fuel injector that provides gaseous fuel to a combustion chamber, the device comprising:
   a flame arrestor configured for positioning in the fuel passage of the fuel injector downstream of the internal components, the flame arrestor including a plurality of flow passages configured to permit downstream gaseous fuel flow through the flame arrestor in a downstream direction while restricting flame propagation through the flame arrestor in an upstream direction.
15. The device of clause 14, further comprising:
   a choke that includes a choke orifice forming a flow constriction in the fuel passage in the downstream direction from the flame arrestor.
16. The device of clause 15, wherein:
   the choke includes a cylindrical body, the cylindrical body extending from an upstream end to a downstream end; and
   the choke orifice includes a center portion, the center portion defining a constant diameter along the cylindrical body.
17. The device of clause 16, wherein the choke orifice includes:
   an upstream portion extending from the center portion in the upstream direction;
   a downstream portion extending from the center portion in the downstream direction; and
   each of the upstream portion and the downstream portion includes a diameter that tapers outwardly from the constant diameter.
18. The device of clause 14, wherein the flame arrestor includes a body extending between an upstream end and an opposite downstream end, and the plurality of flow passages each extend through the body and open at each of the upstream end and the downstream end.
19. The device of clause 18, wherein the plurality of flow passages of the flame arrestor are arranged to form patterns arranged concentrically around the upstream and downstream ends of the flame arrestor.
20. The fuel injector of clause 19, wherein the plurality of flow passages of the flame arrestor includes a central flow passage surrounded by the plurality of flow passages.

## Claims

1. A fuel injector for providing gaseous fuel to a combustion chamber, the fuel injector comprising:
an elongated injector body defining a longitudinally extending fuel passage therein, the fuel passage extending in a downstream direction from a gas inlet end to a gas outlet end of the injector body;
a valve assembly in the fuel passage, the valve assembly including at least one valve that is selectively opened and closed to control gaseous fuel flow through the fuel passage to the combustion chamber; and
a flame arrestor in the fuel passage downstream of the valve assembly.

2. The fuel injector of claim 1, further comprising a choke in the fuel passage that forms a choke orifice between the gas outlet end and the flame arrestor, and/or
further comprising a nozzle on the gas outlet end of the injector body, wherein the nozzle is configured to divert gaseous fuel flow through the gas outlet end into the combustion chamber, and/or
wherein the flame arrestor includes:
a body extending between a first end and an opposite second end; and
a plurality of flow passages extending through the body from the first end to the second end.

3. The fuel injector of claim 2, wherein:
the injector body includes an inner surface extending around the fuel passage; and
the body of the flame arrestor includes an outer surface extending from the first end to the second end, the outer surface engaging the inner surface of the injector body to maintain the flame arrestor in position in the injector body and to optimize heat transfer.

4. The fuel injector of claim 5, wherein the plurality of flow passages of the flame arrestor includes a central flow passage surrounded by the plurality of flow passages.

5. The fuel injector of claim 1, wherein the valve assembly includes:
a first valve that controls gaseous fuel flow through the fuel passage to the combustion chamber; and
a second valve spaced longitudinally from the first valve toward the gas outlet end, the second valve configured to control combustion gas flow from the combustion chamber into the fuel passage through the gas outlet end, wherein the flame arrestor is downstream of the second valve.

6. The fuel injector of claim 7, wherein:
the second valve is biased to a closed position; and
the second valve is moved from the closed position to an open position by the gaseous fuel flow through the first valve.

7. The fuel injector of claim 2, wherein:
the fuel passage includes a first diameter extending in the downstream direction from the flame arrestor to the gas outlet end.

8. The fuel injector of claim 9, wherein:
the choke orifice of the choke defines a second diameter that is less than the first diameter.

9. The fuel injector of claim 10, wherein the choke is positioned in the fuel passage such that the fuel passage extends in an upstream direction and in the downstream direction from the choke orifice.

10. The fuel injector of claim 11, wherein the choke orifice is tapered from the second diameter to the first diameter in both the upstream direction and the downstream direction.

11. The fuel injector of claim 2, wherein:
the flame arrestor is located a first distance from the valve assembly;
the choke is located a second distance from the gas outlet end; and
the choke is located a third distance from the flame arrestor, the third distance being greater than the first distance and the second distance.

12. A device for reducing flame propagation through a fuel passage to internal components of a fuel injector that provides gaseous fuel to a combustion chamber, the device comprising:
a flame arrestor configured for positioning in the fuel passage of the fuel injector downstream of the internal components, the flame arrestor including a plurality of flow passages configured to permit downstream gaseous fuel flow through the flame arrestor in a downstream direction while restricting flame propagation through the flame arrestor in an upstream direction.

13. The device of claim 14, further comprising:
a choke that includes a choke orifice forming a flow constriction in the fuel passage in the downstream direction from the flame arrestor.

14. The device of claim 15, wherein:
the choke includes a cylindrical body, the cylindrical body extending from an upstream end to a downstream end; and
the choke orifice includes a center portion, the center portion defining a constant diameter along the cylindrical body, and wherein optionally, the choke orifice includes:
an upstream portion extending from the center portion in the upstream direction;
a downstream portion extending from the center portion in the downstream direction; and
each of the upstream portion and the downstream portion includes a diameter that tapers outwardly from the constant diameter.

15. The device of claim 14, wherein the flame arrestor includes a body extending between an upstream end and an opposite downstream end, and the plurality of flow passages each extend through the body and open at each of the upstream end and the downstream end, and wherein optionally, the plurality of flow passages of the flame arrestor are arranged to form patterns arranged concentrically around the upstream and downstream ends of the flame arrestor, ad wherein optionally, the plurality of flow passages of the flame arrestor includes a central flow passage surrounded by the plurality of flow passages.
